# EUROPEAN PATENT SPECIFICATION

(11) **EP 3 462 856 B1**
(45) Date of publication and mention of the grant of the patent: **15.04.2020**
(21) Application number: 17728785.1
(22) Date of filing: 19.05.2017
(51) Int. Cl.: A01M 21/04

(54) **THERMAL WEED CONTROL DEVICE FED WITH SOLID FUEL**
FESTBRENNSTOFFVORRICHTUNG ZUR THERMISCHEN UNKRAUTBEKÄMPFUNG
DISPOSITIF DE DÉSHERBAGE THERMIQUE À BASE DE COMBUSTIBLE SOLIDE

(30) Priority: 23.05.2016 IT UB20163707
(43) Date of publication of application: 10.04.2019
(73) Proprietor: RES- Reliable Environmental Solutions- Società Cooperativa, 48122 Ravenna (IT)
(72) Inventor: PRIMANTE, Antonio, 48012 Villanova di Bagnacavallo (RA) (IT)
(74) Representative: Negrini, Elena
(86) International application number: PCT/EP2017/062183
(87) International publication number: WO 2017/202733

(56) References cited:
- EP-A1- 0 413 055
- DE-C- 174 140
- US-A- 3 945 370

## Description

### TECHNICAL FIELD

The present invention relates to the field concerning equipment for agriculture and for maintenance of the green spaces and it refers to a thermal weed control device, in other words weeding with heat or fire, fed with solid fuel preferably of vegetable origin said device usable to remove weeds and vegetation, for disinfection with heat, for disinfestation or for other uses where heating is required such as exsiccation or dehydration of vegetable or of other origin products or generally for thermal treatment.

### BACKGROUND ART

There are known burners for solid fuel consisting of pellet or of wood chips equipped with a lower hearth fed from above by the fuel hit by forced fuel air flow which continues till the fuel has been completely burnt down. Combustion smokes and hot gases make for the top towards a chimney and are intercepted during their way by heat exchangers or by other combustion heat users.

Such known burners have the disadvantage that high quantities of smokes and particulate are produced.
Another drawback of such known burners consists in the fact of not being fitted for smokes and hot gases flows in different directions and towards different ways from the vertical one towards the top.
There are also known burners and reactors equipped with a combustion chamber vertically oriented assigned to contain all the fuel in pellets and fed by combustive air by one of the two different air flows oriented from the bottom to the top.

In such known burners, the combustion chamber is kept at a lower pressure with respect to the environmental atmospheric one.

Said known reactors can realize a pyrolysis of the solid fuel and a combustion of the gases so obtained realizing a flow of hot gases going out from the upper end of the known reactor and which are oriented towards the top.

A disadvantage of such known reactors consists in the fact of not being fitted for uses where it is required that the gas flow is downward oriented except for using expensive and complicated canalizations of such gases.

Further disadvantage of such known burners and reactors consists in the fact of not being fitted for a continuous working.

Documents n° DE 174 140 C and n° EP 0 413 055 A1 disclose the technological background of the present invention.

### DISCLOSURE OF INVENTION

An object of the present invention is to propose a thermal weed control device fed with solid fuel, preferably of vegetable origin, which can direct the hot combustion gases downward with vertical direction or also tilted at angles up to 50° or more with respect to the vertical without such inclinations, even if variable, compromising the quality and the efficiency of the combustion.

Another object is to propose a device which can develop very high maximum temperatures, also about 1000° C - 1200° C and more.

Further object is to propose a device which is movable and manually transportable, by means of a tractor or of another motorized vehicle.

Another object is to propose a device which can be used also in applications different from thermal weed control, for example exsiccation, disinfection with heat, disinfestation on and outside the field in fixed or movable installations.

Further object is to propose a device which during normal operation is nearly free from smokes and harmful gases production.
Another object is to propose a device which can regulate the combustion quality and the power.

Further object is to propose a device which can produce vegetable coal or charcoal starting from the solid fuel and eventually which can provide for the distribution, for the recovery of such charcoal or for the combustion of the charcoal itself.

### BRIEF DESCRIPTION OF DRAWINGS

The features of the invention are underlined below with particular reference to the attached drawings:
- Figure 1 shows a schematic and section view of a reactor means of the thermal weed control device fed with solid fuel object of the present invention;
- Figures 2 - 5 show a possible succession of operative phases of the reactor means of Figure 1 during the use of solid fuel, preferably of vegetable origin, in the form of pellets, wood chips or the like;
- Figure 6 shows a schematic and section view of a variant of the means of Figure 1;
- Figure 7 shows a schematic and partial view of the thermal weed control device fed with solid fuel object of the present invention;
- Figures 8 and 9 show schematically respective variants of the device of Figure 7.

### BEST MODE FOR CARRYING OUT THE INVENTION

With reference to Figures 1 - 5 and 7, 1 indicates the thermal weed control device fed with solid fuel object of the present invention.

The invention provides that the solid fuel consists, for example, of wood pellets, agricultural pellets, wood chips, vegetable coal, and generally products and vegetable and agricultural by-products or coal or the like. The invention provides that the solid elements of the fuel have dimensions ranging from a determined minimum and a determined maximum.

The device 1 comprises a reactor means 3 having a tubular wall, a portion of its longitudinal internal cavity is assigned to contain the solid fuel to burn. Such tubular wall of the reactor means 3 is equipped with an outlet mouth means 5 which puts said internal cavity in communication with outside.

The end opposite to the outlet mouth means 5 of the tubular wall of the reactor means 3 is equipped with a closure means 7 assigned to close the end of the internal cavity opposed to the outlet mouth means 5. The closure means 7 can be connected to the respective end of the tubular wall of the reactor means 3 in a removable way, for example by means of a threaded portion of said closure means 7 which can be screwed to a female screw made in the internal surface of the corresponding end of the tubular wall of the reactor means 3. Alternatively the closure means 7 can be connected to the tubular wall of the reactor means 3 by means of a bayonet link or by means of external hooking or screw fasteners.

The tubular wall of the reactor means 3 consists of a side wall 19 which in cooperation with the closure means 7, delimits said internal cavity.

At least in a first operative condition of the device 1, which will be described below, the outlet mouth means 5 is turned downward, the longitudinal axis of the tubular wall of the reactor means 3 is vertically oriented or it forms with the vertical an angle lower than 90° and the closure means 7 is placed over the outlet mouth means 5.

The reactor means 3 is furthermore provided with a pierced grid means 9 which divides the internal cavity in a first chamber means 11 comprised between the closure means 7 and the grid means 9 and in a second chamber means 13 comprised between the grid means 9 and the outlet mouth means 5. In said first operative condition, the first chamber means 11 is upper than the second chamber means 13.

The dimensions of the holes of the grid means 9 are lower than said minimal dimension of the solid elements of the fuel to prevent it from falling through the grid means 9.

The side wall 19 of the reactor means 3 has thickness nearly constant and has an upper portion, comprised between the closure means 7 and the grid means 9, which has a cylindrical or nearly cylindrical shape.

The lower portion of the side wall 19, which is comprised between the grid means 9 and the outlet mouth means 5 has the shape of a truncated cone with a smaller base in correspondence with the outlet mouth 5; therefore the first chamber means 11, laterally delimited by the upper portion of the side wall 19, has a cylindrical shape and the second chamber means 13, laterally delimited by the lower portion of the side wall 19, has the shape of a truncated cone which narrows towards the outlet mouth means 5 assuming a shape similar to the one of a converging nozzle to speed up the hot gases coming out from the outlet mouth means 5.

The whole side wall 19 can be made of steel or its upper portion can be made of steel and its lower portion can be made of a fictile material, of pottery, of a refractory material or it can be obtained from a geopolymeric material. Alternatively the invention provides that the side wall 19 can be totally made of a fictile, ceramic, refractory or geopolymeric material.

The side wall 19, or its lower portion, can be carried out by casting, milling or forming or, for example in the event of using a geopolymeric material, by means of a three-dimensional printing. The invention finally provides that the whole side wall 19 and the grid means 9 can integral by means of a three-dimensional printing of the geopolymeric material. The closure means 7 can be made of steel or of a fictile material, of pottery, of a refractory material or geopolymeric material.

The total or partial constitution of the reactor means 3 with said fictile, ceramic, refractory or geopolymeric material provides various effects and advantages among which heat insulation, resistance to corrosion, lightness.

The device 1 is provided with first air blower means 15 (or with first air draw means) flowing to the portion of the first chamber means 11 adjacent or near to the closure means 7. The device 1 is also provided with second air blower means 17 (or with second air draw means) flowing to the second chamber means 13.

More specifically the first air blower means 15 has a respective terminal mouth which crosses the thickness of the cylindrical side wall or of the closure means 7 of the reactor means 3 and flows to the upper portion of the first chamber means 11 in proximity to the lower face of the closure means 7; the second air blower means 17 has a respective terminal mouth which crosses the thickness of the cylindrical side wall and which flows to the upper portion of the second chamber means 13, in proximity to the lower face of the grid means 9.

The device 1 comprises thermal insulation means, for example consisting of a substantial layer or carpet of mineral wall or the like, laid on the external surface of the reactor means 3 to improve the efficiency, to speed up the reaching of the normal operation and to avoid risks of burn to the bystanders.

Optionally the device 1 can be equipped with bypass means 25 of gases flow which are coming out from the outlet mouth means 5.

Such optional bypass means 25 comprises a duct 27 fed with an dilution air flow and flowing near to or around the outlet mouth means 5.

Preferably the duct 27 has the shape of an annular chamber and it is adjacent to the convergent portion of the second chamber means 13 which ends with the outlet mouth means 5. The annular chamber of the duct 27 flows thought an annular opening or a set of openings disposed near such outlet mouth means 5. The bypass means 25 increase the capacity of the gas which are sufficiently hot to carry out an effective weeding action increasing the treatable surface in the unity of time and at the same time they 25 protects trees, plants and objects from the contact with a too hot gas which could damage them.

Alternatively, the invention provides that the duct 27 comprises a set of openings flowing directly into the second chamber means 13 through the thickness of said side wall 19 and in proximity to the outlet mouth means 5.

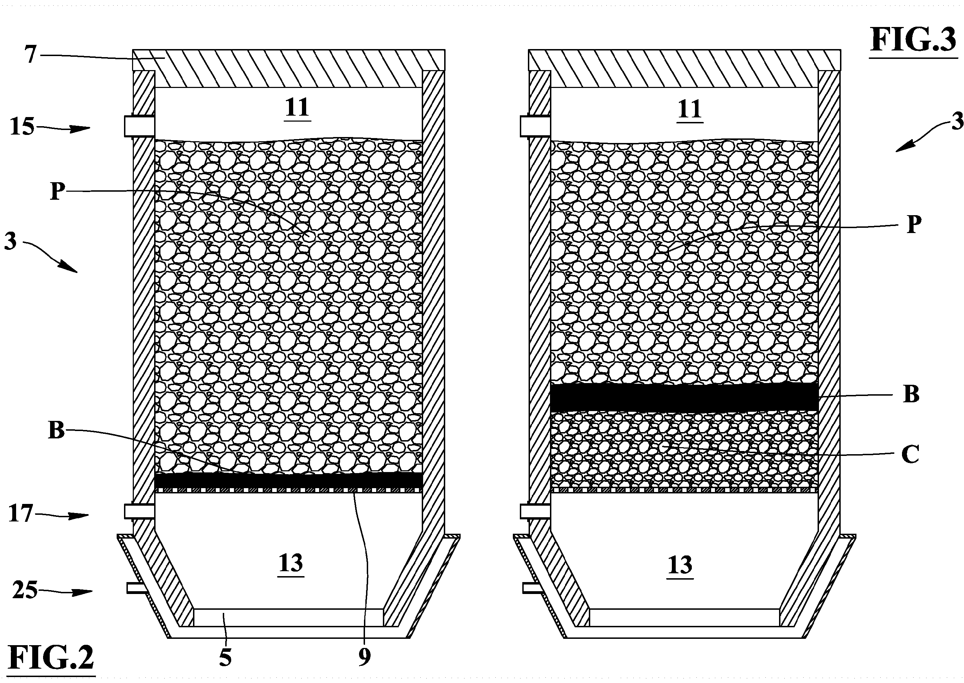

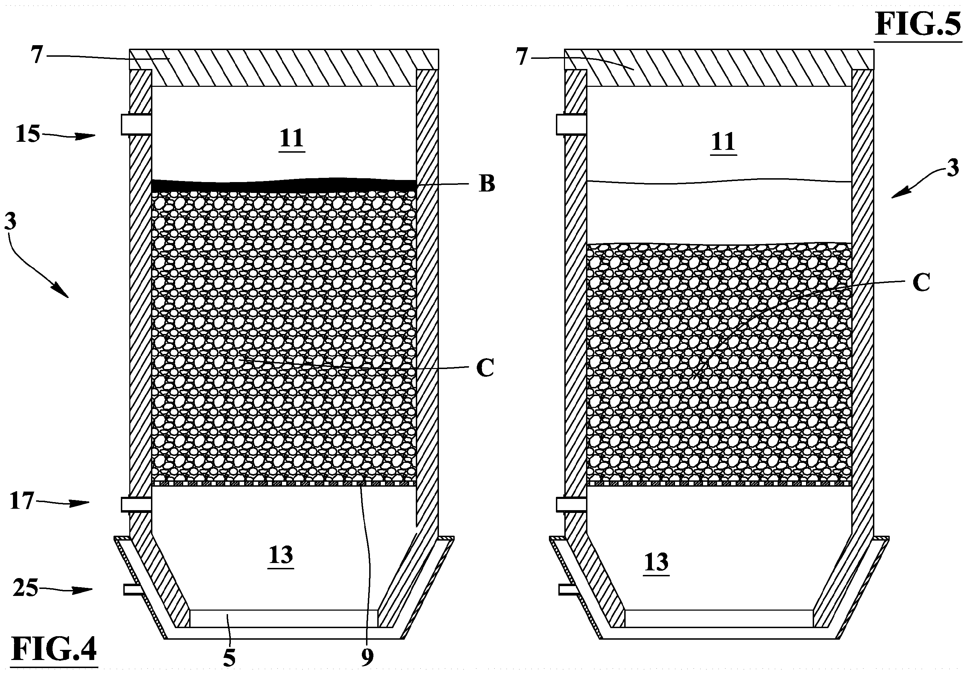

In said first operative condition the first chamber means 11 contains at least some unburned solid fuel P, the air blower means first 15 and second 17 adduce respective air flow, respectively primary and secondary, having respectively and definite flows (or deliveries) appropriately controlled. The primary flow allows a partial combustion of a portion B of the solid fuel in the first chamber means 11 which at the beginning involves the portion of the fuel adjacent to the grid means, as shown in Figure 2, and which later moves towards the top, as shown in Figure 3, till it crosses all the longitudinal size of the fuel P in the internal cavity as shown in Figure 4. The discoidal volume of partial combustion of successive portions of fuel B moves then towards the top and leaves behind itself the burned fuel C said "char" or "charcoal" which at the end of the first operative condition partly fills up said internal cavity as shown in Figure 5. During all the first operative condition the secondary flow carries the combustion, in the second chamber means 13, of the gases which are produced by said partial combustion of a portion B of the solid fuel P.

Said flows primary and secondary adduced by the air blower means first 15 and second 17 are produced by one or more pumping means, for example of centrifugal fan or the like, and such flows keep the pressure inside the cavity of the reactor means 3 at an higher value than the external atmospheric environmental one. The gases flow which are coming out from the outlet mouth means 5 is flows along the longitudinal axis of the reactor means 3 and it is downward oriented.

At the end of the first operative condition of the device 1, whose status is shown in Figure 5, it is possible to interrupt the secondary air flow and control the primary air flow to activate the combustion of the char C starting the second operative condition of the device 1. As an alternative to the combustion of the char C it is possible to interrupt both the primary and the secondary flow and to recover the char by means of a specific door and/or basket, not shown, and/or removing the closure means 7 whose opening allows, after the removal of the char, to reload the internal cavity of the reactor means 3 with the solid fuel to burn.

A further alternative provides, during thermal weed control operations, to discharge the char C by means of the grid means 9 little by little that it is produced leaving it behind on the ground where it can act as amends. For this purpose it is possible to dimension the holes of the grid means so that they are hardly smaller than the solid elements of the fuel to burn and/or the reactor means 3 can be provided with a vibrations generator, for example of compressed air or of rotating eccentric masses kinds, to facilitate the passage of the char through the grid means 9.

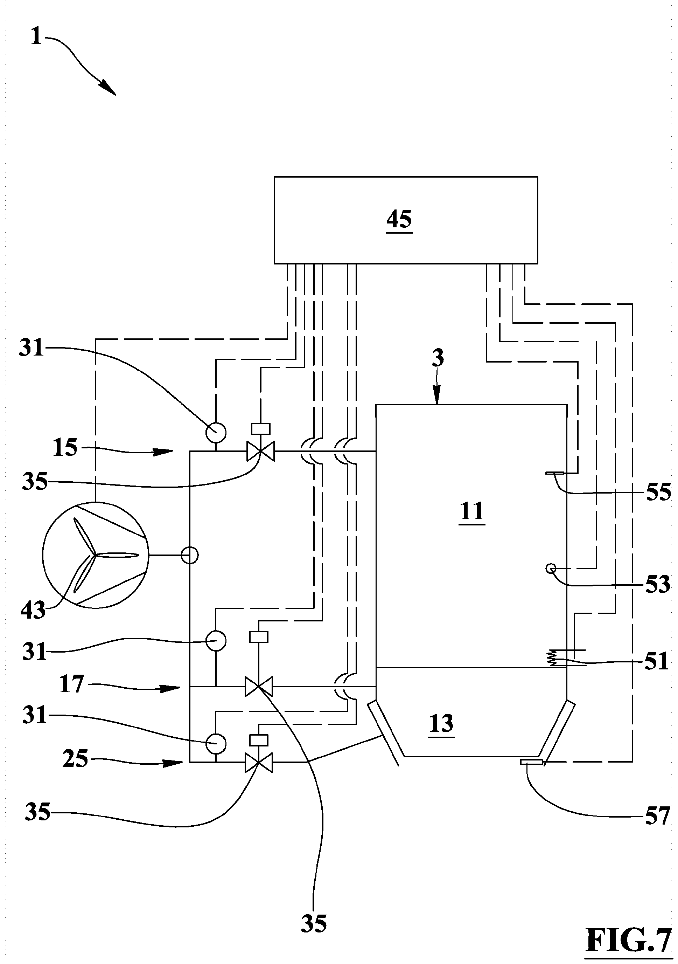

As shown in Figure 7, the air blower means first 15 and second 17 are provided with respective ducts fed by a single common pumping means 43, where the flow produced by said pumping means 43 is divided into said ducts. Each duct of such air blower means first 15 and second 17 is provided with a respective delivery detector or sensor 31 and it is equipped with a respective flow regulation valve 35.

The optional bypass means 25 of the coming out gases of the device is fed by said pumping means 43 and it is equipped with a respective delivery detector or sensor 31 and with a respective regulation valve 35 of its own flow. The pumping means 43 can be of a fixed or adjustable delivery type and the regulation valves 35 are of a remote control and regulation.

The device 1 comprises digital programmable control means 45 which are equipped with a plurality of input gates for analogue or digital signals and with a plurality of output gates for remote controls.

Each delivery sensor 31 is connected to a respective input gate for signals; the pumping means 43, if of adjustable delivery type, and each regulation valve 35 of remote control type are connected to respective control output gates and are operated and controlled by the control means on the basis of an execution and stabilization program at least of the first operative condition.

In such first operative condition the control algorithms run by the control means 45 control, by means of the regulation valves, the primary air delivery (or flow) to values ranging from 5% to 25% of the value of the secondary air delivery.

Alternatively, the delivery detectors 31 can be of direct reading type and the regulation valves 35 can be manually operated to control the device by a human user; in such alternative the pumping means 43 can be of fixed or manually adjustable delivery type. The first chamber means 11 can be equipped with at least one among firing means 51, fuel level sensor 53 and one or more thermal sensors 55 or an array of thermal sensors. The firing means 51 is placed near the grid means 9 and it is connected to an output gate of the control means 45 and operated by this latter to ignite the partial combustion expected in the first operative condition. The fuel level sensor 53 is placed near the closure means 7 and it is connected to an input gate of the control means 45 to provide this latter with data about the filling up of the first chamber means 11.

The sensors of the array of thermal sensors 55 are laterally arranged and they lay along the longitudinal development of the first chamber means 11. Each of such sensors of the array or the at least one thermal sensor 55 is connected to a respective input gate of the control means 45 to provide this latter with data about the operation temperature (s) of the first chamber means 11.

The outlet mouth means 5 of the second chamber means 13 can be equipped with a lambda sensor means 57 which is exposed to the coming out gases and connected to a respective input gate of the control means 45.

The data provided to the control means 45 by such fuel level sensors 53, thermal sensors 55 and lambda sensor means 57 are used by the algorithms stored into the control means 45 to control the operation conditions of the device in order to improve the efficiency and the cleaning of the operation and to control the thermal power provided for example by means of the regulation of the primary and secondary flows. The invention provides that it is possible to equip the device with thermoelectric optional cells, for example of Seebeck effect type, assigned to feed the control means 45 and the regulation valves 35 eventually operated by the control means 45, for example in the event of having a device devoid of batteries or with poor electrical autonomy or devoid of electrical feeding. The device 1 is equipped with a frame and with connections for the link to a vehicle eventually equipped with a power take-off for the operation of the pumping means 43 and/or the electrical feeding of the control means 45 and of the means and the elements 35, 51, 65 operated by them 45. Alternatively it is also provided that the device is equipped with thermoelectric cells, an accumulator or a generator or the like but that the pumping means are external; for example the air blower means first 15 and second 17 can be fed with pressurized air provided by a traction vehicle of the device or by other feedings of pressurized air external to the device.

The frame of the device can eventually house a plurality of reactor means 3 placed transversally with respect to the direction of the motion of the vehicle so as to act on a strip of land proportionally wider.

Alternatively the device 1 can be equipped with a vehicle with wheels of motorized type or truck or trailer type or manual handling wheelbarrow type where the pumping means 41, 43 are operated by the motor of this last vehicle or are of electrical type and fed by accumulators of the device or by an external electrical source connected to the pumping means to feed them.

Besides the trailer configuration for the manual handling of the device, it is also provided a version of this latter with a first shoulder portion or a shoulder strap (for example containing battery and pumping means) and a second portion manual handled (for example consisting of the reactor means eventually equipped with wheels) connected to the first portion by flexible pipes and/or ducts.

So the device can be fitted for the weeding of small areas, for example edges, verges, spaces between rows of vegetables or of other plants, etc. equipping it with a frame with one or two wheels, with accumulators or engine for the pumping means and with manual regulation valves or of big surfaces equipping it with a frame which can be applied at the back or at the front of a tractor and assigned to support one or more reactor means 3 whose pumping means can be electrically, mechanically operated or operated in an hydraulic way by means of suitable sockets of the tractor and respective operation motors.

It must be observed that the device can be used also for disinfestation or for static applications such as exsiccation or dehydration of agricultural products, for thermal treatments, etc., or for disinfection with heat for example in farms and in zootechnical facilities.

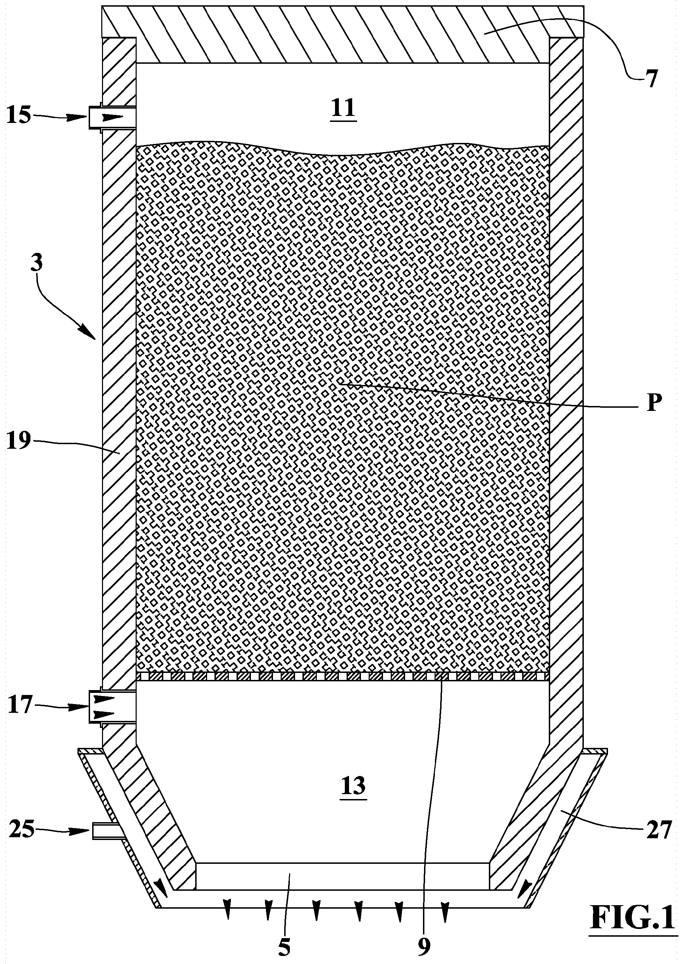

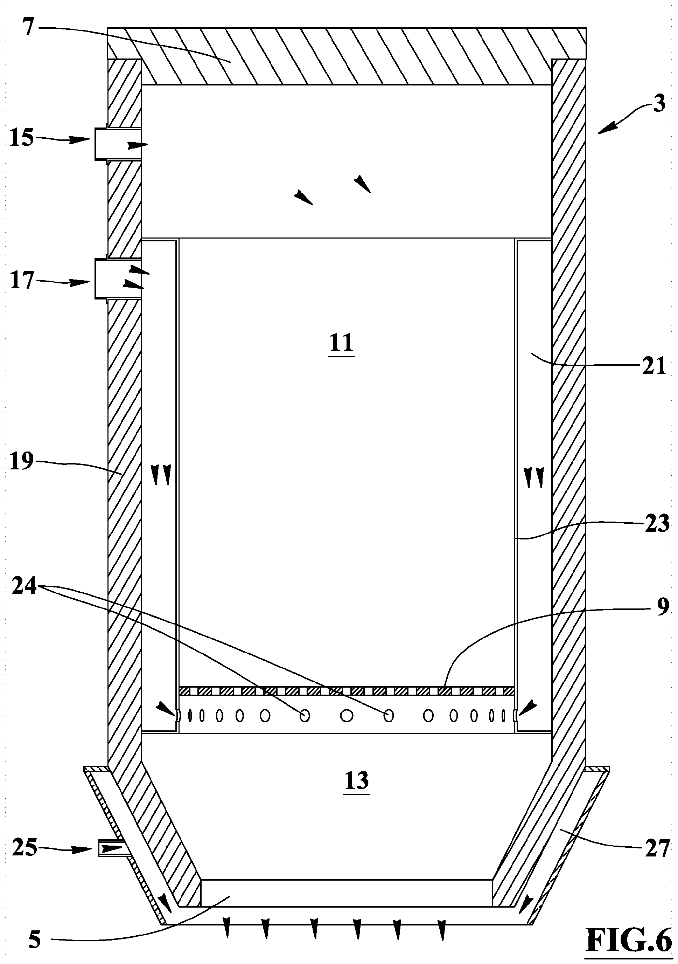

The variant of the device of Figure 6 differs from the embodiment of Figure 1 because the second air blower means 17 comprises an interspace means 21 laterally delimited by an interspace wall 23 and by a portion of the side wall 19. Such interspace means 21 is fed with the secondary air flow provided by the second air blower means 17 heating such air before the inflow into the second chamber means 13 by means of a plurality of openings 24 carried out, through the interspace wall 23 of the interspace means 21, between the grid means 9 and the outlet mouth means 5. In this variant the edge of the grid means 9 matches with the interspace wall 23.

This variant is very efficient and it is fitted also for low-quality fuels.

Alternatively the interspace wall 23 and the interspace means 21 can be external to the side wall 19 and, in this alternative, the openings 24 are obtained through this last side wall 19.

The invention provides that also the reactor means 3 of this variant can be made of said fictile, ceramic, refractory or geopolymeric material.

Particularly, it is provided that the reactor means 3, complete with side wall 19, with interspace wall 23 with respective through-holes, with grid means 9 and with possible duct 27 and other elements of the bypass means 25 of the flow whether integral or made of more components by means of three-dimensional printing in other words by means of 3D printing of a geopolymeric material or the like. Also the closure means 7 can be obtained by means of 3D printing of a geopolymeric material or the like. Such reactor means 3 obtained by means of 3D printing of a geopolymeric material, besides being insulating, light and corrosion-resistant, allows to shape and to dimension the wall of the interspace, the interspace itself of the grip means 9 to optimize the performance and efficiency of the use during work depending on the various combustible materials.

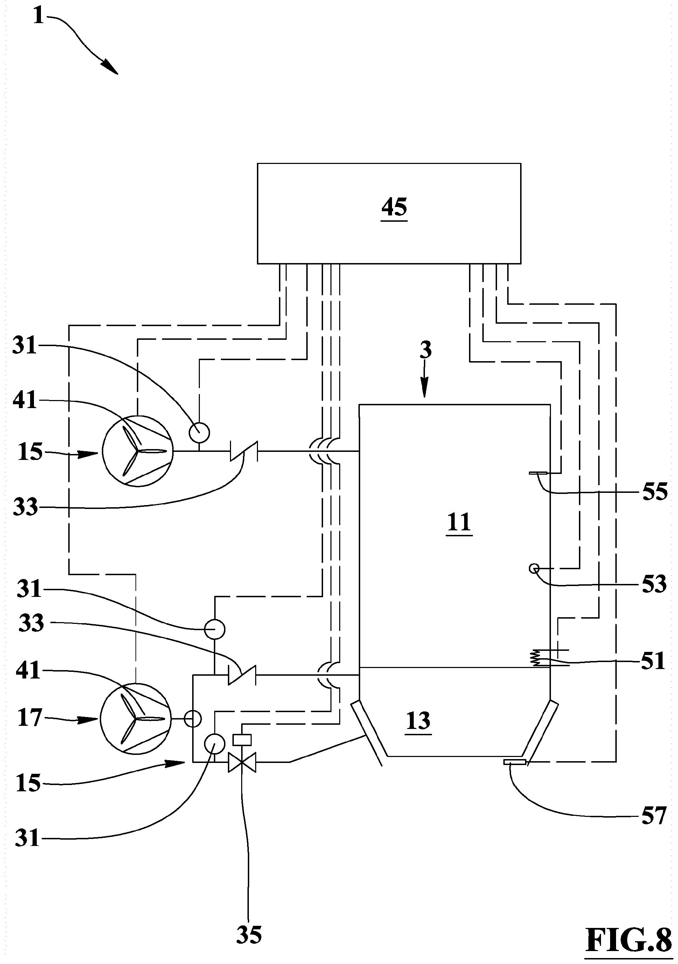

The variant of the device of Figure 8 differs from the embodiment of Figure 7 because it comprises a pumping means 41 of adjustable delivery type for each of the air blower means first 15 and second 17 which are fed by said pumping means 41 with the respective air flows. Each pumping means 41 is feedback controlled, on the basis of the delivery provided by the respective delivery sensor 31, and the regulation valves of the air blower means first 15 and second 17 of the first embodiment can be replaced by respective check valves 33.

The optional bypass means 25 of the coming out gases of the device is fed by the pumping means itself 41 of the second air blower means 17 and it is equipped with a respective delivery sensor 31 and with a respective controlled type regulation valve 35 controlled by the control means 45.

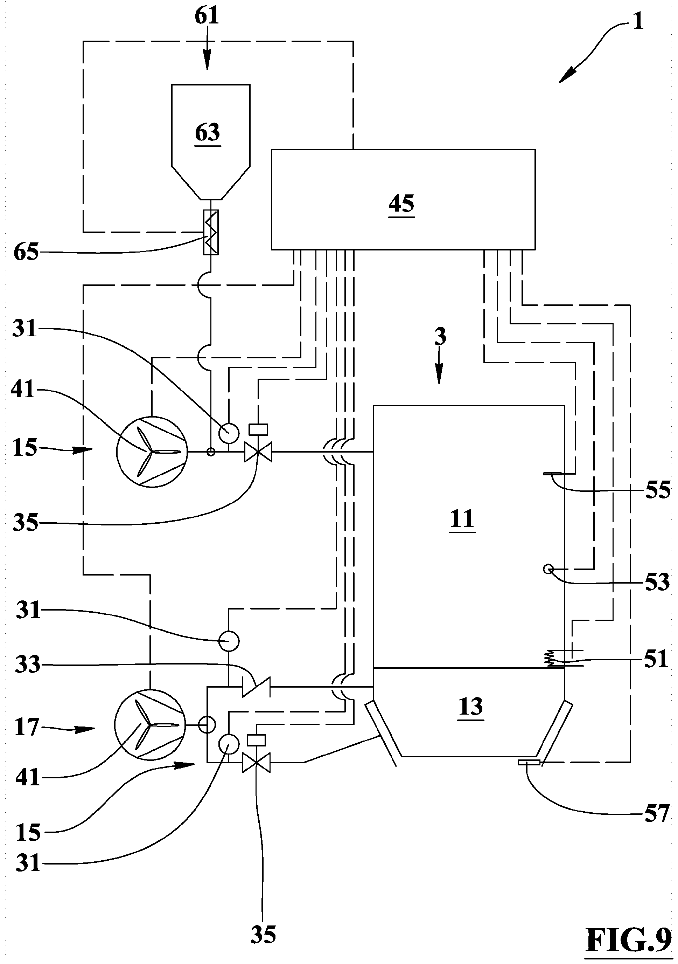

The variant of the device of Figure 9 differs from the variant of Figure 8 because it comprises solid fuel feeding means 61 comprising a hopper means or tank means 63 for such fuel and connected by means of pipes and fuel feeding adjusting means 65, for example of motorized Archimedean screw type or belt conveyor or others, to the flow duct of the first air blower means 15 equipped with a regulation valve 35 controlled by the control means 45 and flowing into the first chamber means 11 inside which said flow drags the fuel. Said fuel feeding adjusting means 65 are connected to a respective outflow gate of the control means 45 which operate such fuel feeding adjusting means 65 to control its 65 delivery.

This variant allows to feed continuously the device and to control the power within wider intervals with respect to the preceding embodiments and variants.
Alternatively the invention provides that the feeding means 61 comprises a delivery controlled conveyor, for example of Archimedean screw or belt type or the like, controlled by the control means for feeding the solid fuel directly into the first chamber means 11.

It must be finally observed that all the embodiments and variants of the device can use solid fuel which is produced in the same place of using allowing, besides saving however guaranteed by the device of the invention, to realize a local reuse of the resources.

## Claims

1. Thermal weed control device feed with solid fuel, comprising a reactor means (3) and **characterized in that** inside of said reactor means (3) is provided with an inner cavity and it (3) is provided with an outlet mouth means (5) connecting said inner cavity to outside and with an closure means (7) assigned to close the end of the inner cavity opposed to the outlet mouth means (5); at least in a first operative condition of the device (1), said outlet mouth means (5) is positioned lower than said closure means (7), the reactor means (3) is further provided with a pierced grid means (9) dividing the inner cavity in a first chamber means (11) limited between the closure means (7) and the grid means (9) and a second chamber means (13) limited between the grid means (9) and the outlet mouth means (5) and the device (1) is provided with first air blower means (15) flowing into the portion of the first chamber means (11) adjacent or close to the closure means (7) and with second air blower means (17) flowing into the second chamber means (13); in said first operative condition the first chamber means (11) contains at least some unburned solid fuel (P), the air blower means first (15) and second (17) adduct respectively primary and secondary air flows having corresponding deliveries, where the primary flow supports a partial combustion of at least a portion (B) of the solid fuel (P) into the first chamber means (11) and the secondary flow supports the combustion into the second chamber means (13) of the gases produced by said partial combustion of a portion of the solid fuel (P); said primary and secondary flows adducted by the air blower means first (15) and second (17) keep the pressure inside the inner cavity of the reactor means (3) at a value higher than the value of the external environmental atmospheric pressure and the flow of the gases exiting the outlet mouth means (5) at least in the first operative condition is at least partially downward oriented.

2. Device according to claim 1 **characterized in that** the reactor means (3) is provided with a side wall (19) cooperating with the closure means (7) to limit the inner cavity and the second air blower means (17) comprises an interspace means (21) laterally limited by an interspace wall (23) and by a portion of the side wall (19) and feed said interspace means (21) with the secondary air flow warming said air before to put the warmed air into the second chamber means (13) through a plurality of openings connecting the latter (13) to the inside of the interspace means (21), said openings being positioned between the grid means (9) and the outlet mouth means (5).

3. Device according to claim 1 or 2 **characterized in that** at least a portion of the second chamber means (13) adjacent to the outlet mouth means (5) tapers toward the latter (5) being shaped similarly to a convergent nozzle.

4. Device according to any of the preceding claims **characterized in that** it comprises bypass means (25) diluting the gas flow exiting the outlet mouth means (5), and comprising at least a duct (27) feed with an diluting air flow and comprising a chamber toroidal shaped, adjacent to the portion of the second chamber means (13) ending with the outlet mouth means (5), said chamber flowing by means of an annular opening or a set of openings around or close to said outlet mouth means (5).

5. Device according to any of the preceding claims **characterized in that** it comprises thermal insulating means fixed to the external surface of the reactor means (3).

6. Device according to any of the preceding claims **characterized in that** each of the air blower means first (15) and second (17) is provided with a respective pumping means (41), of the kind having a constant delivery or of the kind having an adjustable delivery, assigned to feed the corresponding air blower means (15, 17) with the respective air flow or said air blower means first (15) and second (17) are fed by a single common pumping means (43) and they (15, 17) share the flow thereof and each of said air blower means first (15) and second (17) is provided with a delivery detector or sensor (31) and is equipped with a check valve (33) or it (15, 17) is equipped with a flow regulation valve (35); a bypass means (25) diluting the outlet gas of the device is fed by a respective pumping means or by one of said pumping means (41) of said air blower means and is equipped with a respective delivery detector or sensor (31) and/or regulation valve (35) for setting the respective flow; where said adjustable delivery pumping means (41) and regulation valve (35) is of the manual operated or remote operated kinds.

7. Device according to claim 6 **characterized in that** it comprises digital programmable control means (45) provided with a plurality di input gates for analog or digital signals and with a plurality di output gates for remote commands; where each delivery sensor (31) is linked to a respective signal input gate and where each adjustable delivery pumping means (41) e/o each remotely operated regulation valve (35) is linked to a respective commands output gate and is operated and adjusted by the control means.

8. Device according to claim 7 **characterized in that** the first chamber means (11) is provided with at least one among: firing means (51) located close to the grid means (9) and linked to an output gate of the control means (45) and operated by the latter, fuel level sensor (53) sited close to the closure means (7) and linked to an input gate of the control means (45) and a set or array of thermal sensors (55) sited at a side and spread along the longitudinal development of said first chamber means (11) where each of said thermal sensors (55) is linked to a respective input gate of the control means (45); the outlet mouth means (5) of the second chamber means (13) is equipped with a lambda sensor means (57) sited into the flow of the outlet gasses and linked to an input gate of the control means (45).

9. Device according to claim 7 or 8 **characterized in that** it comprises gate means to reach the inside of the first chamber means (11) for feeding the latter with the solid fuel and consisting of a port or consisting of the detachable closure means (7) or it (1) comprises solid fuel feeding means (61) comprising an hopper means or tank means (63) for storing said fuel, connected by means of fuel feeding adjusting means (65) to a flow duct of the first air blower means (15) flowing into the first chamber means (11) where said flow trails the fuel in into the latter (11) and where said fuel feed adjusting means (65) are linked to a respective output gate of the control means (45), the latter operates said fuel feed adjusting means (65) to adjust the fuel delivery.

10. Device according to any of the preceding claims **characterized in that** it is equipped with a chassis and connections for the fixing to a vehicle provided with a power takeoff for driving the pumping means (41, 43) and/or with electric power plugs for electrically feeding the control means (45) and the means and elements (35, 51, 65) controlled by the control means (45) or it (1) is provided with a motorized or manually moved wheeled vehicle where the pumping means (41, 43) are driven by the engine of the vehicle or they (41, 43) are electric driven and feed by batteries of the device or by an external electric source.

## Patentansprüche

1. Thermische Unkrautbekämpfungsvorrichtung, die mit Festbrennstoff gespeist wird, mit einem Reaktormittel (3) und **dadurch gekennzeichnet, dass** das Innere des Reaktormittels (3) mit einem inneren Hohlraum ausgestattet ist und dass das Reaktormittel (3)
mit einem Auslassmündungsmittel (5) ausgestattet ist, das den inneren Hohlraum mit dem Außenbereich verbindet, und
mit einem Verschlussmittel (7) ausgestattet ist, das zugeordnet ist, um das Ende des inneren Hohlraums, das dem Auslassmündungsmittel (5) gegenüberliegt, zu verschließen;
zumindest in einem ersten Betriebszustand der Vorrichtung (1) ist das Auslassmündungsmittel (5) niedriger positioniert als das Verschlussmittel (7), das Reaktormittel (3) ist weiter mit einem durchlöcherten Gittermittel (9) ausgestattet, das den inneren Hohlraum unterteilt in ein erstes Kammermittel (11), das zwischen dem Verschlussmittel (7) und dem Gittermittel (9) begrenzt ist, und ein zweites Kammermittel (13), das zwischen dem Gittermittel (9) und dem Auslassmündungsmittel (5) begrenzt ist, und
die Vorrichtung (1) ist mit einem ersten Luftgebläsemittel (15) ausgestattet, das in den Teil des ersten Kammermittels (11) benachbart oder nahe dem Verschlussmittel (7) hineinströmt, und mit einem zweiten Luftgebläsemittel (17), das in das zweite Kammermittel (13) hineinströmt;
wobei in dem ersten Betriebszustand das erste Kammermittel (11) zumindest etwas unverbrannten Festbrennstoff (P) enthält, das erste (15) und zweite Luftgebläsemittel (17) saugt einen primären bzw. sekundären Luftstrom mit entsprechenden Fördermengen an, wobei der primäre Strom eine Teilverbrennung zumindest eines Teils (B) des Festbrennstoffs (P) in dem ersten Kammermittel (11) unterstützt und der sekundäre Strom die Verbrennung der Gase, die durch die Teilverbrennung eines Teils des Festbrennstoffs (P) erzeugt werden, in dem zweiten Kammermittel (13) unterstützt;
wobei die primären und sekundären Ströme, die von dem ersten (15) und dem zweiten Luftgebläsemittel (17) angesaugt werden, den Druck innerhalb des inneren Hohlraums des Reaktormittels (3) auf einem Wert halten, der höher ist als der Wert des äußeren Umgebungsatmosphärendrucks, und der Strom der Gase, die aus dem Auslassmündungsmittel (5) austreten, ist zumindest im ersten Betriebszustand zumindest teilweise nach unten ausgerichtet.

2. Die Vorrichtung gemäß Anspruch 1, **dadurch gekennzeichnet, dass** das Reaktormittel (3) mit einer Seitenwand (19) ausgestattet ist, die mit dem Verschlussmittel (7) zusammenwirkt, um den inneren Hohlraum zu begrenzen, und dass
das zweite Luftgebläsemittel (17) ein Zwischenraummittel (21) umfasst, das seitlich durch eine Zwischenraumwand (23) und durch einen Teil der Seitenwand (19) begrenzt ist, und das Zwischenraummittel (21) mit dem sekundären Luftstrom speist, der die Luft erwärmt, bevor die erwärmte Luft in das zweite Kammermittel (13) durch eine Mehrzahl von Öffnungen eingebracht wird, die das letztere (13) mit dem Inneren des Zwischenraummittels (21) verbinden, wobei die Öffnungen zwischen dem Gittermittel (9) und dem Auslassmündungsmittel (5) angeordnet sind.

3. Die Vorrichtung gemäß Anspruch 1 oder 2, **dadurch gekennzeichnet, dass** sich zumindest ein Teil des zweiten Kammermittels (13), das benachbart zu dem Auslassmündungsmittel (5) ist, in Richtung des letzteren (5) verjüngt, wobei es ähnlich einer konvergierenden Düse geformt ist.

4. Vorrichtung nach einem der vorhergehenden Ansprüche, **dadurch gekennzeichnet, dass** sie Bypass-Mittel (25) umfassen, die den Gasstrom verdünnen, der aus dem Auslassmündungsmittel (5) austritt, und zumindest eine Leitung (27) umfasst, die mit einem verdünnenden Luftstrom gespeist wird und eine torusförmige Kammer umfasst, die benachbart zu dem Teil des zweiten Kammermittels (13) liegt, der mit dem Auslassmündungsmittel (5) endet, wobei die Kammer mittels einer ringförmigen Öffnung oder einer Gruppe von Öffnungen um das Auslassmündungsmittel (5) herum oder in dessen Nähe verläuft.

5. Die Vorrichtung gemäß einem der vorhergehenden Ansprüche, **dadurch gekennzeichnet, dass** sie wärmeisolierende Mittel umfasst, die an der äußeren Oberfläche des Reaktormittels (3) befestigt sind.

6. Vorrichtung nach einem der vorhergehenden Ansprüche, **dadurch gekennzeichnet, dass** jedes der ersten (15) und zweiten Luftgebläsemittel (17) mit einem entsprechenden Pumpmittel (41) ausgestattet ist, von der Art mit konstanter Fördermenge oder von der Art mit regelbarer Fördermenge, das zugeordnet ist, um das entsprechende Luftgebläsemittel (15, 17) mit dem entsprechenden Luftstrom zu speisen oder
das erste (15) und das zweite Luftgebläsemittel (17) werden von einem einzelnen gemeinsamen Pumpmittel (43) gespeist und sie (15, 17) teilen sich den Strom desselben, und jedes des ersten (15) und des zweiten Luftgebläsemittels (17) ist mit einem Förderdetektor oder - sensor (31) ausgestattet und mit einem Rückschlagventil (33) versehen, oder es (15, 17) ist mit einem Stromregelventil (35) versehen;
wobei ein Bypass-Mittel (25), das das austretende Gas der Vorrichtung verdünnt, durch ein entsprechendes Pumpmittel oder durch eines der Pumpmittel (41) der Luftgebläsemittel gespeist wird und mit einem entsprechenden Förderdetektor oder -sensor (31) und/oder einem Regelventil (35) zum Einstellen des entsprechenden Flusses ausgestattet ist; wobei das einstellbare Förderpumpmittel (41) und das Regelventil (35) von der manuell betätigten oder fernbetätigten Art sind.

7. Die Vorrichtung gemäß Anspruch 6, **dadurch gekennzeichnet, dass** sie digitale programmierbare Steuermittel (45) umfasst, die mit einer Mehrzahl von digitalen Eingangsgattern für analoge oder digitale Signale und mit einer Mehrzahl von digitalen Ausgangsgattern für Fern- bzw. Remote-Befehlen ausgestattet sind;
wobei jeder Fördersensor (31) mit einem entsprechenden Signaleingangsgatter verbunden ist und wobei jedes einstellbare Förderpumpmittel (41) und/oder jedes fernbetätigte Regelventil (35) mit einem entsprechenden Befehlsausgangsgatter verbunden ist und durch das Steuermittel betätigt und eingestellt wird.

8. Die Vorrichtung gemäß Anspruch 7 **dadurch gekennzeichnet, dass** das erste Kammermittel (11) mit zumindest einem der folgenden ausgestattet ist:
ein Zündmittel (51), das in der Nähe des Gitters (9) angeordnet ist und mit einem Ausgangsgatter des Steuermittels (45) verbunden ist und von diesem betätigt wird,
ein Brennstoffniveausensor (53), der in der Nähe des Verschlussmittels (7) angeordnet und mit einem Eingangsgatter des Steuermittels (45) verbunden ist, und
ein Satz oder eine Anordnung von Wärme- bzw. Thermosensoren (55), die an einer Seite angeordnet und entlang der Längsausdehnung des ersten Kammermittels (11) verteilt sind, wobei jeder der Wärmesensoren (55) mit einem entsprechenden Eingangsgatter des Steuermittels (45) verbunden ist;
wobei das Auslassmündungsmittel (5) des zweiten Kammermittels (13) mit einem Lambda-Sensormittel (57) ausgestattet ist, das in dem Strom der austretenden Gase angeordnet und mit einem Eingangsgatter des Steuermittels (45) verbunden ist.

9. Die Vorrichtung gemäß Anspruch 7 oder 8, **dadurch gekennzeichnet, dass** sie Gattermittel umfasst, um in das Innere des ersten Kammermittels (11) zu gelangen, um dieses mit dem Festbrennstoff zu speisen, und die aus einem Anschluss bestehen oder aus den abnehmbaren Verschlussmitteln (7) bestehen,
oder die Vorrichtung (1) umfasst ein Einspeisemittel (61) für Festbrennstoff, das ein Trichtermittel oder ein Tankmittel (63) zum Speichern des Brennstoffs umfasst, das mittels eines Einstellmittels (65) zur Brennstoffeinspeisung mit einem Strömungskanal des ersten Luftgebläsemittels (15) verbunden ist, das in das erste Kammermittel (11) strömt, wobei der Strom dem Brennstoff in das Kammermittel (11) folgt und wobei das Einstellmittel (65) zur Brennstoffeinspeisung mit einem entsprechenden Ausgangsgatter des Steuermittels (45) verbunden ist,
wobei das Steuermittel das Einstellmittel (65) zur Brennstoffeinspeisung betätigt, um die Brennstoffzufuhr einzustellen.

10. Die Vorrichtung gemäß einem der vorhergehenden Ansprüche, **dadurch gekennzeichnet, dass** sie mit einem Fahrgestell und Anschlüssen für die Befestigung an einem Fahrzeug versehen ist, das mit einem Nebenantrieb für den Antrieb der Pumpmittel (41, 43) ausgestattet ist, und/oder mit elektrischen Stromsteckern zur elektrischen Speisung des Steuermittels (45) und der von dem Steuermittel (45) gesteuerten Mittel und Elemente (35, 51, 65), oder die Vorrichtung (1) ist mit einem motorisierten oder manuell bewegten Radfahrzeug ausgestattet, wobei die Pumpmittel (41, 43) durch den Motor des Fahrzeugs angetrieben werden oder sie (41, 43) werden elektrisch angetrieben und durch Batterien der Vorrichtung oder durch eine externe elektrische Quelle gespeist.

## Revendications

1. Dispositif de désherbage thermique alimenté par combustible solide, comprenant un moyen réacteur (3) et **caractérisé par le fait que** l'intérieur dudit moyen réacteur (3) comporte une cavité interne et il (3) comporte un moyen ouverture de sortie (5) reliant ladite cavité interne à l'extérieur et un moyen fermeture (7) destiné à fermer l'extrémité de la cavité interne à l'opposé du moyen ouverture de sortie (5) ; au moins dans un premier état de fonctionnement du dispositif (1), ledit moyen ouverture de sortie (5) est positionné plus bas que ledit moyen fermeture (7), le moyen réacteur (3) comporte en outre un moyen grille percée (9) divisant la cavité interne en un premier moyen chambre (11) limité entre le moyen fermeture (7) et le moyen grille (9) et un second moyen chambre (13) limité entre le moyen grille (9) et le moyen ouverture de sortie (5) et le dispositif (1) comporte un premier moyen soufflante d'air (15) pour écoulement dans la partie du premier moyen chambre (11) adjacent ou proche du moyen fermeture (7) et un second moyen soufflante d'air (17) pour écoulement dans le second moyen chambre (13) ; dans ledit premier état de fonctionnement le premier moyen chambre (11) contient au moins du combustible solide non brûlé (P), les premier (15) et second (17) moyens soufflantes d'air adductent des écoulements d'air respectivement primaire et secondaire ayant des apports correspondants, l'écoulement primaire soutenant une combustion partielle d'au moins une partie (B) du combustible solide (P) dans le premier moyen chambre (11) et l'écoulement secondaire soutenant la combustion dans le second moyen de chambre (13) des gaz produits par ladite combustion partielle d'une partie du combustible solide (P) ; lesdits écoulements primaire et secondaire adductés par les premier (15) et second (17) moyens soufflantes d'air maintiennent la pression à l'intérieur de la cavité interne du moyen réacteur (3) à une valeur supérieure à la valeur de la pression atmosphérique environnementale externe et l'écoulement des gaz sortant du moyen ouverture de sortie (5) au moins dans le premier état de fonctionnement est au moins partiellement orienté vers le bas.

2. Dispositif selon la revendication 1 **caractérisé par le fait que** le moyen réacteur (3) comporte une paroi latérale (19) coopérant avec le moyen fermeture (7) pour limiter la cavité interne et le second moyen soufflante d'air (17) comprend un moyen espace intermédiaire (21) limité latéralement par une paroi d'espace intermédiaire (23) et par une partie de la paroi latérale (19) et alimente ledit moyen espace intermédiaire (21) avec l'écoulement d'air secondaire réchauffant ledit air avant d'introduire l'air réchauffé dans le second moyen chambre (13) par l'intermédiaire d'une pluralité d'ouvertures reliant ce dernier (13) à l'intérieur du moyen espace intermédiaire (21), lesdites ouvertures étant positionnées entre le moyen grille (9) et le moyen ouverture de sortie (5).

3. Dispositif selon la revendication 1 ou la revendication 2 **caractérisé par le fait qu'**au moins une partie du second moyen chambre (13) adjacente au moyen ouverture de sortie (5) se rétrécit vers ce dernier (5) en étant formé de manière similaire à une buse convergente.

4. Dispositif selon l'une quelconque des revendications précédentes **caractérisé par le fait qu'**il comprend un moyen dérivation (25) diluant l'écoulement de gaz sortant du moyen ouverture de sortie (5), et comprenant au moins un conduit (27) alimenté par un écoulement d'air diluant et comprenant une chambre de forme torique, adjacente à la partie du second moyen chambre (13) se terminant par le moyen ouverture de sortie (5), ladite chambre s'écoulant au moyen d'une ouverture annulaire ou d'un ensemble d'ouvertures autour ou proches dudit moyen ouverture de sortie (5).

5. Dispositif selon l'une quelconque des revendications précédentes **caractérisé par le fait qu'**il comprend un moyen d'isolation thermique fixé à la surface externe du moyen réacteur (3).

6. Dispositif selon l'une quelconque des revendications précédentes **caractérisé par le fait que** chacun des premier (15) et second (17) moyens soufflantes d'air comporte un moyen de pompage respectif (41), du type ayant une alimentation constante ou du type ayant une alimentation ajustable, destiné à alimenter le moyen soufflante d'air correspondant (15, 17) avec l'écoulement d'air respectif ou lesdits premier (15) et second (17) moyens soufflantes d'air sont alimentés par un unique moyen de pompage commun (43) et ils (15, 17) partagent l'écoulement de celui-ci et chacun desdits premier (15) et second (17) moyens soufflantes d'air comporte un capteur ou détecteur d'alimentation (31) et comporte un clapet anti-retour (33) ou il (15, 17) est équipé d'une vanne de régulation d'écoulement (35) ; un moyen dérivation (25) diluant le gaz de sortie du dispositif est alimenté par un moyen de pompage respectif ou par l'un desdits moyens de pompage (41) desdits moyens soufflantes d'air et est équipé d'un capteur ou détecteur d'alimentation respectif (31) et/ou d'une vanne de régulation (35) pour réguler l'écoulement respectif ; ledit moyen de pompage d'alimentation ajustable (41) et ladite vanne de régulation (35) étant du type actionné manuellement ou du type actionné à distance.

7. Dispositif selon la revendication 6 **caractérisé par le fait qu'**il comprend un moyen de commande programmable numérique (45) comportant une pluralité de portes d'entrée pour des signaux analogiques ou numériques et une pluralité de portes de sortie pour des commandes à distance ; chaque capteur d'alimentation (31) étant relié à une porte d'entrée de signal respective et chaque moyen de pompage d'alimentation ajustable (41) et/ou chaque vanne de régulation actionnée à distance (35) étant relié à une porte de sortie de commandes respective et étant actionné et ajusté par le moyen de commande.

8. Dispositif selon la revendication 7 **caractérisé par le fait que** le premier moyen chambre (11) comporte au moins l'un parmi : un moyen d'allumage (51) situé proche du moyen grille (9) et relié à une porte de sortie du moyen de commande (45) et actionné par ce dernier, un capteur de niveau de combustible (53) situé proche du moyen fermeture (7) et relié à une porte d'entrée du moyen de commande (45) et un ensemble ou réseau de capteurs thermiques (55) situés sur un côté et répartis le long du développement longitudinal dudit premier moyen chambre (11), chacun desdits capteurs thermiques (55) étant relié à une porte d'entrée respective du moyen de commande (45) ; le moyen ouverture de sortie (5) du second moyen chambre (13) est équipé d'un moyen sonde lambda (57) situé dans l'écoulement des gaz de sortie et relié à une porte d'entrée du moyen de commande (45).

9. Dispositif selon la revendication 7 ou la revendication 8 **caractérisé par le fait qu'**il comprend un moyen porte pour atteindre l'intérieur du premier moyen chambre (11) pour alimenter ce dernier avec le combustible solide et consistant en un orifice ou consistant en le moyen fermeture détachable (7) ou il (1) comprend un moyen d'alimentation en combustible solide (61) comprenant un moyen trémie ou un moyen réservoir (63) pour stocker ledit combustible, relié à l'aide de moyens d'ajustement d'alimentation en combustible (65) à un conduit d'écoulement du premier moyen soufflante d'air (15) pour écoulement dans le premier moyen chambre (11), ledit écoulement entraînant le combustible dans ce dernier (11) et lesdits moyens d'ajustement d'alimentation en combustible (65) étant reliés à une porte de sortie respective du moyen de commande (45), ce dernier actionne lesdits moyens d'ajustement d'alimentation de carburant (65) pour ajuster l'alimentation en carburant.

10. Dispositif selon l'une quelconque des revendications précédentes **caractérisé par le fait qu'**il est équipé d'un châssis et de liaisons pour la fixation à un véhicule comportant une prise de force pour entraîner les moyens de pompage (41, 43) et/ou de prises électriques pour alimenter électriquement le moyen de commande (45) et les moyens et éléments (35, 51, 65) contrôlés par le moyen de commande (45) ou il (1) comporte un véhicule à roues déplacé manuellement ou motorisé, les moyens de pompage (41, 43) étant entraînés par le moteur du véhicule ou ils (41, 43) sont entraînés électriquement et alimentés par des batteries du dispositif ou par une source électrique externe.
